# EUROPEAN PATENT APPLICATION

(11) **EP 2 182 506 A2**
(43) Date of publication of application: **05.05.2010**
(21) Application number: 09012971.9
(22) Date of filing: 14.10.2009
(51) Int. Cl.: G09G 3/34

(54) **Light source device and method for driving the same**

(30) Priority: 31.10.2008 KR 20080107656
(71) Applicant: Samsung Electronics Co., Ltd., Yeongtong-gu Suwon-city, Gyeonggi-do 442-742 (KR)
(72) Inventor: Kim, Hyuk-Hwan, Asan-si Chungcheongnam-do (KR); Nam, Seok-Hyun, Seodaeum-gu Seoul (KR); Cho, Chi-O, Asan-si Chungcheongnam-do (KR); Yoon, Sang-Hyuck, Seocho-gu Seoul (KR)
(74) Representative: Dr. Weitzel & Partner

(57) **Abstract**

A light source device includes; a light source module (200) including a plurality of light-emitting blocks (B), a local dimming driving part (270), which drives the plurality of light-emitting blocks on the basis of a dimming level of a over light-emitting block (OLB), by controlling a dimming level of the over light-emitting block and dimming levels of peripheral light-emitting blocks (SLB) disposed adjacent to the over light-emitting block to drive the plurality of light-emitting blocks.

## Description

### BACKGROUND OF THE INVENTION

### 1. Field of the Invention

Exemplary embodiments of the present invention relate to a light source device, a method for driving the light source device, and a display device having the light source device. More particularly, exemplary embodiments of the present invention relate to a light source device capable of controlling the amount of heat generated thereby, a method for driving the light source device, and a display device having the light source device.

### 2. Description of the Related Art

Generally, a liquid crystal display ("LCD") apparatus includes an LCD panel displaying an image using the light transmissivity of liquid crystal, and a backlight assembly disposed below the LCD panel to provide light to the LCD panel.

The LCD panel typically includes an array substrate having pixel electrodes and thin-film transistors ("TFTs") electrically connected to the pixel electrodes, a color filter substrate having a common electrode and color filters, and a liquid crystal layer interposed between the array substrate and the color filter substrate.

The arrangement of liquid crystal molecules of the liquid crystal layer may be altered by an electric field formed between the pixel electrodes and the common electrode, so that the transmissivity of light passing through the liquid crystal layer may be modified thereby. Here, when the light transmissivity is increased to maximum, the LCD panel may display a white image having a high luminance. Contrarily, when the light transmissivity is decreased to minimum, the LCD panel may display a black image having a low luminance.

However, since it is generally difficult for the liquid crystal layer to be perfectly arranged in any particular direction, leakage of light through the LCD panel may be generated at a low grayscale value, e.g., a light transmissivity value being closer to a black image luminance than a white image luminance. That is, it is difficult for the LCD panel to display a completely black image at a low grayscale value, so that the contrast ratio ("CR") of an image displayed on the LCD panel may be decreased.

Recently, to prevent the CR of the image from being reduced, a light source local dimming method for controlling an amount of light emitted from backlight assembly according to position has been developed. The light source local dimming method typically includes dividing the light source into a plurality of light-emitting blocks and controlling the amount of light emitted by the light-emitting blocks, corresponding to the contrast of a display area of the LCD panel aligned with the light-emitting blocks. For example, the light-emitting block corresponding to the display area displaying the black image is driven to have a low luminance (for example, it may be turned off), the emitting block corresponding to the display area displaying the white image emits light to have a high luminance.

However, since the generation of heat may be concentrated in a certain light-emitting block by driving the light source for each of the blocks according to the image displayed on the LCD panel, the melting of a side mold equipped in the display apparatus, or the deterioration of the liquid crystal layer equipped in the display apparatus may be generated due to the generation of heat.

### BRIEF SUMMARY OF THE INVENTION

Exemplary embodiments of the present invention provide a light source device capable of controlling the amount of heat generated thereby.

Exemplary embodiments of the present invention also provide a method for driving the above-mentioned light source device.

Exemplary embodiments of the present invention also provide a display device having the above-mentioned light source device.

According to one exemplary embodiment of the present invention, a light source device includes; a light source module including a plurality of light-emitting blocks, a local dimming driving part which drives the plurality of light-emitting blocks on the basis of a dimming level of a over light-emitting block, by controlling the dimming level of the over light-emitting block and dimming levels of peripheral light-emitting blocks disposed adjacent to the over light-emitting block to drive the plurality of light-emitting blocks.

In one exemplary embodiment, the local dimming driving part includes; an image analyzing part which analyzes an image signal corresponding to a light-emitting block of the plurality of light-emitting blocks to obtain a representative luminance value of the light-emitting block, a dimming level determining part which determines a dimming level for controlling the brightness of the light-emitting block using the representative luminance value, a light distribution compensating part which compensates the dimming level of the over light-emitting block and the dimming levels of the peripheral light-emitting blocks on the basis of a reference temperature, and a light source driving part which drives the plurality of light-emitting blocks on the basis of the compensated dimming levels.

According to another exemplary embodiment of the present invention, a method for driving a light source device which drives a light source including of a plurality of light-emitting blocks by individually driving each of light-emitting blocks, includes determining a dimming level of each of the plurality of light-emitting blocks on the basis of the dimming level of an over light-emitting block of the plurality of light-emitting blocks, controlling a dimming level of the over light-emitting block and dimming levels of peripheral light-emitting blocks positioned adjacent to the over light-emitting block and driving the plurality of light-emitting blocks on the basis of the controlled dimming levels.

According to still another exemplary embodiment of the present invention, a display device includes; a display panel which displays an image and is divided into a plurality of display blocks, a light source module which includes a plurality of light-emitting blocks aligned with the plurality of display blocks, a local dimming driving part which controls a dimming level of the over light-emitting block and dimming levels of peripheral light-emitting blocks positioned adjacent to the over light-emitting block to drive the plurality of light-emitting blocks, wherein the local dimming part controls the dimming level of the plurality of light-emitting blocks on the basis of an over light-emitting block of the plurality of light-emitting blocks.

According to a light source device, a method for driving the light source device and a display device having the light source device, local control of the generation of heat may be effectively possible, by controlling the dimming level of the over light-emitting block and the dimming levels of the peripheral light-emitting blocks positioned adjacent to the over light-emitting block to compensate the dimming levels.

### BRIEF DESCRIPTION OF THE DRAWINGS

The above and other features and advantages of the present invention will become more apparent by describing in detailed exemplary embodiments thereof with reference to the accompanying drawings, in which:

FIG. 1 is a block diagram illustrating an exemplary embodiment of a display apparatus according to Exemplary Embodiment 1 of the present invention;

FIGS. 2 and 3 are schematic plan views illustrating the exemplary embodiment of a light source module of FIG. 1;

FIG. 4 is a block diagram illustrating an exemplary embodiment of the light distribution compensating part of FIG. 1;

FIG. 5 is a flowchart illustrating an exemplary embodiment of a method for driving the exemplary embodiment of a local dimming driving part of FIG. 1;

FIG. 6 is a block diagram illustrating an exemplary embodiment of a display apparatus according to Exemplary Embodiment 2 of the present invention;

FIG. 7 is a block diagram illustrating an exemplary embodiment of a light distribution compensating part of FIG. 6; and

FIG. 8 is a flowchart illustrating an exemplary embodiment of a method for driving the exemplary embodiment of a local dimming driving part of FIG. 6.

### DETAILED DESCRIPTION OF THE INVENTION

The invention now will be described more fully hereinafter with reference to the accompanying drawings, in which exemplary embodiments of the invention are shown. The invention may, however, be embodied in many different forms and should not be construed as limited to the exemplary embodiments set forth herein. Rather, these exemplary embodiments are provided so that this disclosure will be thorough and complete, and will fully convey the scope of the present invention to those skilled in the art. Like reference numerals refer to like elements throughout.

It will be understood that when an element is referred to as being "on" another element, it can be directly on, connected or coupled to the other element or intervening elements or layers may be present. In contrast, when an element is referred to as being "directly on" another element, there are no intervening elements present. As used herein, the term "and/or" includes any and all combinations of one or more of the associated listed items.

It will be understood that, although the terms first, second, third, etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments of the invention are described herein with reference to cross-sectional illustrations that are schematic illustrations of idealized example embodiments (and intermediate structures) of the present invention. As such, variations from the shapes of the illustrations as a result, for example, of manufacturing techniques and/or tolerances, are to be expected. Thus, example embodiments of the present invention should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, the present invention will be explained in detail with reference to the accompanying drawings.

### <Exemplary Embodiment 1>

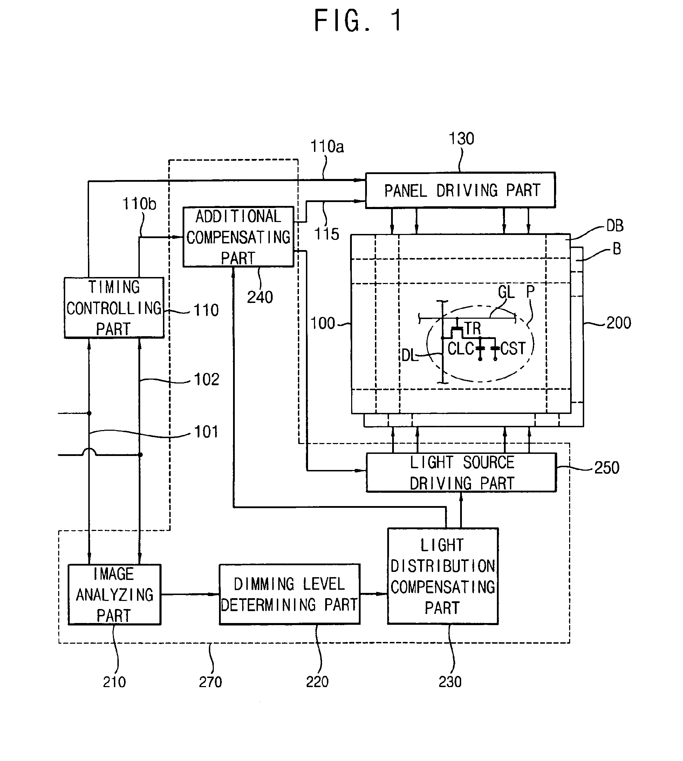

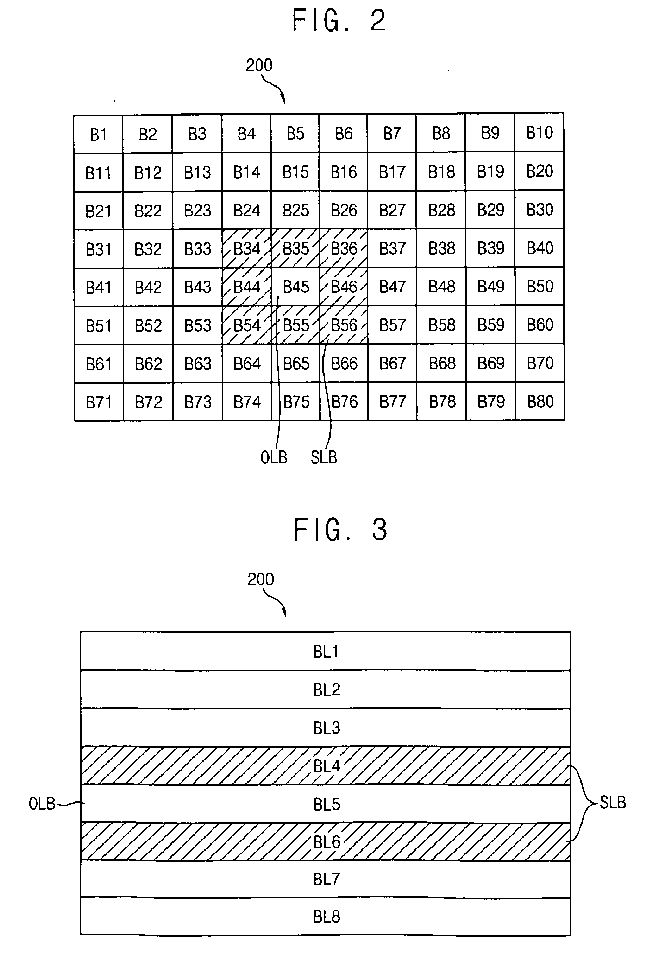

FIG. 1 is a block diagram illustrating an exemplary embodiment of a display apparatus according to Exemplary Embodiment 1 of the present invention. FIGS. 2 and 3 are schematic plan views illustrating an exemplary embodiment of a light source module of FIG. 1.

Referring to FIGS. 1 to 3, the display apparatus includes a display panel 100, a timing controlling part 110, a panel driving part 130, a light source module 200 and a local dimming driving part 270.

The display panel 100 includes a plurality of pixels for displaying an image. In one exemplary embodiment the display panel 100 includes M×N pixels, wherein 'M' and 'N' are natural numbers. Exemplary embodiments include configurations wherein M = N. In the present exemplary embodiment, each pixel P includes a transistor TR connected to a gate line GL and a data line DL, a liquid crystal capacitor CLC connected to the transistor TR and a storage capacitor CST. The display panel 100 includes a plurality of display blocks DB. In one exemplary embodiment, the number of the display blocks DB is m×n, wherein 'm' and 'n' are natural numbers, and m<M and/or n<N).

The timing controlling part 110 receives a control signal 101 and an image signal 102 from an external device (not shown). The control signal 101 may include a horizontal synchronization signal Hsync and a vertical synchronization signal Vsync. The vertical synchronization signal Vsync may define a starting time and a finishing time for displaying a horizontal line displayed on a screen. The vertical synchronization signal Vsync may define a starting time and a finishing time of each of frames. The timing controlling part 110 generates a timing control signal 110a controlling a driving timing of the display panel 100 using the received control signal 101. In one exemplary embodiment, the timing control signal 110a includes a clock signal, a horizontal start signal STH and a vertical start signal STV. In one exemplary embodiment, the control signal 101 and the image signal 102 are received by a local dimming driving part 270 to be described in more detail below.

The panel driving part 130 drives the display panel 100 using the timing control signal 110a provided from the timing controlling part 110 and a second image signal 115, which is a compensated image signal derived from a first image signal 110b provided from the timing controlling part 110. In one exemplary embodiment, the panel driving part 130 includes a gate driving part (not shown) and a data driving part (not shown). The gate driving part generates a gate signal using the timing control signal to provide the gate line GL with the gate signal. The data driving part (not shown) generates a data signal using the timing control signal and an image signal to provide the data line DL with the data signal.

In one exemplary embodiment, the light source module 200 includes a printed circuit board ("PCB") on which a plurality of light-emitting diodes ("LEDs") is mounted. Exemplary embodiments of the LEDs may include a red LED, a green LED, a blue LED and a white LED. In one exemplary embodiment, the light source module 200 includes m×n light-emitting blocks LB corresponding to the m×n display blocks DB. In one exemplary embodiment, the light-emitting blocks LB are disposed in an area which is aligned with the display blocks DB, so that each of the light-emitting blocks LB is aligned with an individual display block DB, respectively.

In one exemplary embodiment, the light source module 200, as shown in FIG. 2, may be divided into 10×8 light-emitting blocks B1, B2, ..., B79 and B80. In one exemplary embodiment, each of the light-emitting blocks LB may include a plurality of LEDs.

Alternative exemplary embodiments include configurations wherein the light source module 200, as shown in FIG. 3, may be divided into 1×8 light-emitting blocks BL1, BL2, ..., BL7 and BL8. In one exemplary embodiment, each of the light-emitting blocks LB may include a plurality of LEDs and a plurality of lamps.

Since peripheral light-emitting blocks SLB of the light source module 200 shown in FIG. 2 are greater in number than that of the light source module 200 shown in FIG. 3, e.g., there are eight peripheral light-emitting blocks SLB in FIG. 2 while there are only two peripheral light-emitting blocks SLB in FIG. 3, the amount of heat generated by an over light-emitting block OLB may be effectively distributed. Exemplary embodiments of over light-emitting blocks OLB may include light-emitting blocks which are driving to provide an increased amount of light in comparison to the peripheral blocks SLB.

In the present exemplary embodiment, the local dimming driving part 270 includes an image analyzing part 210, a dimming level determining part 220, a light distribution compensating part 230, an additional compensating part 240 and a light source driving part 250.

The image analyzing part 210 analyzes the luminance of an image signal of a certain unit by using the control signal 101 and the image signal 102 that are received from an external device (not shown). For example, the image analyzing part 210 analyzes the image signal of a frame unit and obtains a representative luminance value of the display blocks DB corresponding to each of the light-emitting blocks LB. That is, the image analyzing part 210 analyzes the image signal of the display block DB corresponding to the representative luminance value of each light-emitting block LB, so that the representative luminance value of that display block is obtained.

The dimming level determining part 220 determines the dimming level controlling the brightness of the light-emitting block LB using the representative luminance value of each of the light-emitting blocks LB. In one exemplary embodiment, when the representative luminance value is large, the dimming level is increased, when the representative luminance value is small, the dimming level is decreased. The dimming level determining part 220 determines the dimming levels corresponding to the plurality of light-emitting blocks LB.

The light distribution compensating part 230 compensates the light-emitting blocks LB by using the dimming level from the dimming level determining part 220, so that the temperature of the light-emitting blocks LB may not be locally concentrated.

In one exemplary embodiment, the light distribution compensating part 230 may designate a light-emitting block which is continuously maintained at a high temperature, e.g., a temperature higher than the reference temperature, as an over light-emitting block OLB. The light distribution compensating part 230 decreases the dimming level of the designated over light-emitting block OLB and, according to above, increases the dimming levels of the peripheral light-emitting blocks SLB positioned adjacent to the over light-emitting block OLB. Accordingly, the locally high temperature of the over light-emitting block OLB is distributed to the peripheral light-emitting blocks SLB, so that the melting of the side mold equipped in the display device, or the deterioration of the liquid crystal equipped in the display device, generated due to the generation of heat, may be prevented.

In one exemplary embodiment, the additional compensating part 240 decreases the temperature of the over light-emitting block OLB, when the temperature of the over light-emitting block OLB is not sufficiently distributed to the peripheral light-emitting blocks SLB, or when the temperature of the over light-emitting block OLB cannot be distributed to the peripheral light-emitting blocks SLB.

Here, the additional compensating part 240 compensates the image signal corresponding to the pixels where the image is to be corrected. In one exemplary embodiment, the image signal may be compensated through image processing. The compensation through the image processing is for compensating since if the luminance of the over light-emitting block OLB is suddenly decreased, the luminance of an image displayed on the display panel 100 is decreased and the image becomes dark.

The light source driving part 250 generates driving signals for driving the light-emitting blocks LB using dimming levels compensated through the light distribution compensating part 230 and/or the additional compensating part 240. In one exemplary embodiment, the driving signals may be pulse-width modulated ("PWM") signals. The driving signals correspond to each of the light-emitting blocks LB, and the light-emitting blocks LB are driven to have the brightness corresponding to the luminance of the image signal, respectively. That is, in one exemplary embodiment the light source module 200 is driven using a local dimming method.

According to Exemplary Embodiment 1 of the present invention, the light distribution compensating part 230 and the additional compensating part 240 may be embodied as a field-programmable gate array ("FPGA") or an application-specific integrated circuit ("ASIC").

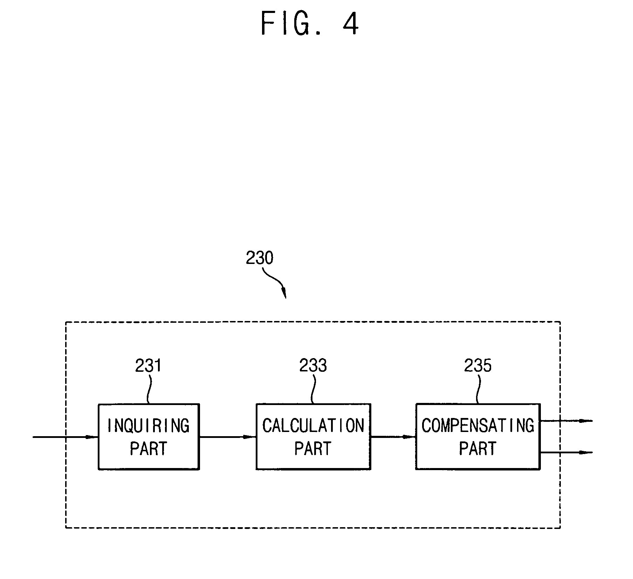

FIG. 4 is a block diagram illustrating the light distribution compensating part of FIG. 1.

Referring to FIG. 4, an exemplary embodiment of the light distribution compensating part 230 includes an inquiring part 231, a calculation part 233 and a compensating part 235.

The inquiring part 231 inquires about the temperature of each of the light-emitting blocks LB in the light source module 200, respectively. In Exemplary Embodiment 1, the inquiring part 231 inquires about a temperature value corresponding to the corresponding voltage, as a voltage is supplied to the light-emitting blocks LB on the basis of a certain lookup table ("LUT") in which the temperature value to a power voltage is mapped.

Specifically, in one exemplary embodiment power consumption amounts of each of the light-emitting blocks LB is calculated on the basis of a result of addition of a duty rate of the dimming levels input to each of the light-emitting blocks LB during a certain time. The generation of heat corresponding to the power consumption amount in a previously set-up LUT is confirmed and a temperature corresponding to the generation of heat in the LUP may be inquired about. Also, a block requiring the control of the generation of heat in the light-emitting blocks LB is selected on the basis of the temperature. That is, a light-emitting block (or blocks) LB having a temperature higher than the reference temperature is found on the basis of the temperature and is established as the over light-emitting block (or blocks) OLB. The calculation part 233 calculates an over power amount required to make the temperature of the over light-emitting block OLB be retained below the reference temperature on the basis of the LUT. A luminance compensable value of the peripheral light-emitting blocks SLB positioned adjacent to the over light-emitting block (or blocks) OLB may be calculated, based on the over power amount. Here, the luminance compensable value is a value of addition of differences between the power consumption amounts of the peripheral blocks SLB and a power amount corresponding to the reference temperature. Here, when the luminance compensable value is larger than the over power amount, the dimming level of the over light-emitting block OLB may be sufficiently compensated by the peripheral blocks SLB.

The compensating part 235 increases the dimming levels of the peripheral light-emitting blocks SLB to increase the temperature of the peripheral light-emitting blocks SLB in a range smaller than the calculated luminance compensable value. Also, the compensating part 235 decreases the dimming level of the over light-emitting block OLB to reduce the temperature corresponding to the over light-emitting block OLB.

Accordingly, the light source driving part 250 drives the light-emitting blocks LB according to compensated dimming levels of the light-emitting blocks LB.

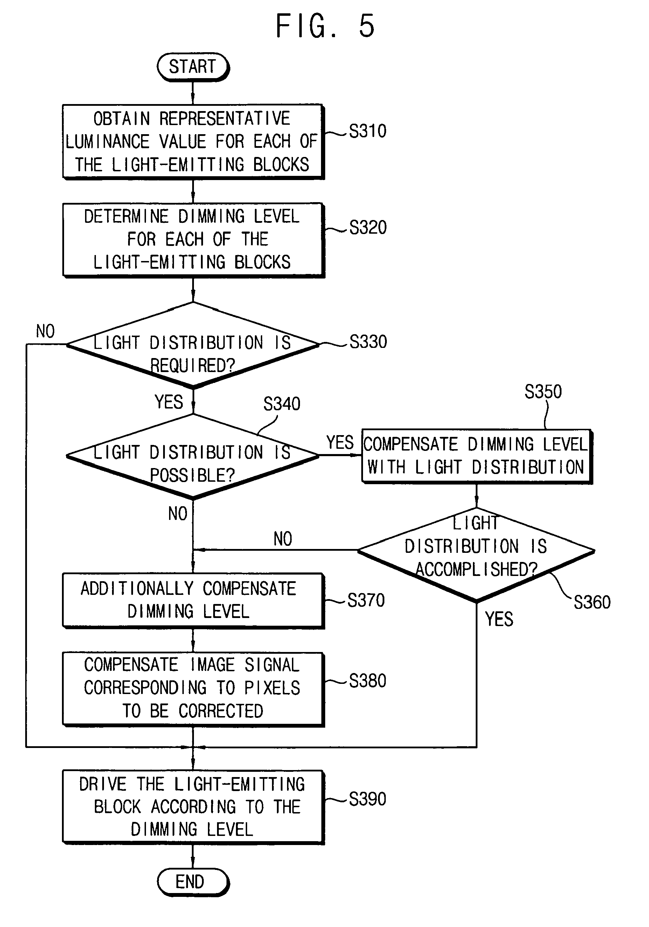

FIG. 5 is a flowchart illustrating an exemplary embodiment of a method for driving the local dimming driving part 270 of FIG. 1.

Referring FIGS. 1 and 5, the image analyzing part 210 analyzes a gray scale for an image signal of a frame unit received from an external device to obtain representative luminance values corresponding to each of the light-emitting blocks LB (step S310).

The dimming level determining part 220 determines the dimming level controlling the brightness of the light-emitting blocks LB using the representative luminance values (step S320).

The light distribution compensating part 230 controls the dimming level of the over light-emitting block (blocks) OLB and the dimming levels of the peripheral light-emitting blocks SLB positioned adjacent to the over light-emitting block (blocks) OLB to compensate. That is, the light distribution compensating part 230 distributes the locally high temperature of the over light-emitting block (blocks) OLB to the peripheral light-emitting blocks SLB having the lower temperature.

In Exemplary Embodiment 1 of the present invention, when the over light-emitting block OLB is B45 in the light source module 200 comprising 10×8 light-emitting blocks B1, B2, ..., B79, B80 shown in FIG. 2, the peripheral light-emitting blocks SLB may be B34, B35, B36, B44, B46, B54, B55 and B56.

However, exemplary embodiments also include configurations wherein the peripheral light-emitting blocks SLB may further include B23, B24, B25, B26, B27, B33, B37, B43, B53, B57, B63, B64, B65, B66 and B67, etc.

That is, the peripheral light-emitting blocks SLB may include a plurality of blocks positioned adjacent to the over light-emitting block OLB, or a plurality of light-emitting blocks LB disposed adjacent to the peripheral light-emitting blocks SLB disposed adjacent to the over light-emitting block OLB.

Likewise, when the over light-emitting block OLB is BL5 in the light source module 200 comprising 1×8 light-emitting blocks BL1, BL2, ..., BL7, BL8 shown in FIG. 3, the peripheral light-emitting blocks SLB may be BL4 and BL6.

However, exemplary embodiments also include configurations wherein the peripheral light-emitting blocks SLB may further include BL3 and BL7 in FIG. 3.

That is, the peripheral light-emitting blocks SLB may include a plurality of blocks positioned adjacent to the over light-emitting block OLB, or a plurality of light-emitting blocks LB disposed adjacent to the peripheral light-emitting blocks SLB disposed adjacent to the over light-emitting block OLB.

Specifically, the inquiring part 231 included in the light distribution compensating part 230 inquires about temperatures of the light-emitting blocks LB in the light source module 200, respectively.

The calculation part 233 of the light distribution compensating part 230 determines whether or not a block requiring the control of the generation of heat in the light-emitting blocks LB, that is, the over light-emitting blocks OLB, exists on the basis of the inquired temperature (step S330).

When the over light-emitting block OLB requiring the controlling of the generation of heat exists, the light distribution compensating part 230 starts a light distribution of the over light-emitting block OLB.

However, when the over light-emitting block OLB requiring the controlling of the generation of heat does not exist, the light source driving part 250 drives the light-emitting blocks LB according to the dimming levels of the light-emitting blocks LB without dimming level compensation.

The calculation part 233 calculates an over power amount required so that a temperature corresponding to the over light-emitting block OLB becomes below the reference temperature and a luminance compensable value of the peripheral light-emitting blocks SLB positioned adjacent to the over light-emitting block OLB.

Here, the compensating part 235 included in the light distribution compensating part 230 checks that a light distribution is available on the basis of whether or not the luminance compensable value exists (step S340).

When the luminance compensable value exists, the compensating part 235 included within the light distribution compensating part 230 decreases the dimming level of the over light-emitting block OLB, and increases the dimming levels of the peripheral light-emitting blocks SLB, corresponding to a decreased degree of the dimming level, to compensate the dimming levels of the over light-emitting block OLB and the peripheral light-emitting blocks SLB (step S350).

Also, the compensating part 235 compares the over power amount with the luminance compensable value to check whether or not the light distribution is accomplished (step S360).

When the over power amount is larger than the luminance compensable value, since it means that the light distribution is not sufficiently accomplished, the additional compensating part 240 decreases the dimming level of the over light-emitting block OLB (step S370).

Here, since the dimming level of the over light-emitting block OLB is decreased, the luminance of the image displayed on the display panel 100 may be more decreased than that of the initially displayed image. Accordingly, to compensate for the decreasing of the luminance, the additional compensating part 240 compensates the image signal corresponding to pixels where the image is to be corrected (step S380).

Next, according to the compensated dimming level, the light source driving part 250 drives the light-emitting blocks with a brightness corresponding to the luminance of the image signal (step S390).

When the over power amount is less than the luminance compensable value, since the light distribution is sufficiently accomplished, the light source driving part 240 drives the light-emitting blocks LB according to the compensated dimming levels (step S390).

When the luminance compensable value does not exist, since the luminance of the peripheral light-emitting blocks SLB is close to the luminance corresponding to the reference temperature, the compensating part 235 included in the light distribution compensating part 230 may not distribute light. Accordingly, the additional compensating part 240 decreases the dimming level of the over light-emitting block OLB (step S370) and compensates the image signal corresponding to the pixels where the image is to be corrected (step S380), without the light distribution. Next, the light source driving part 240 drives the light-emitting blocks LB according to the compensated dimming levels (step S390).

Accordingly, since the amount of heat that is locally concentrated to the over light-emitting block OLB is distributed to the peripheral light-emitting blocks SLB, problems such as the melting of the side mold equipped in the display device or the deterioration of the liquid crystal equipped in the display device due to the generation of heat may be prevented.

### <Exemplary Embodiment 2>

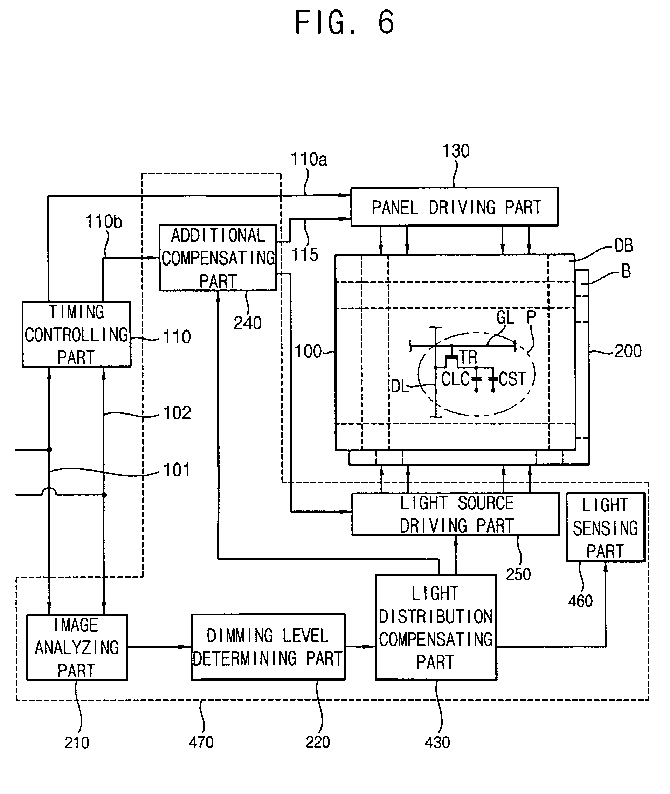

FIG. 6 is a block diagram illustrating an exemplary embodiment of a display apparatus according to Exemplary Embodiment 2 of the present invention.

Here, since an exemplary embodiment of a display device shown in FIG. 6 is substantially identical to the exemplary embodiment of a display device shown in FIG. 1, except for a local dimming driving part 470, identical reference numbers are used for the corresponding elements and a repeated explanation is omitted.

Since schematic plan views for a light source module shown in FIG. 6 are substantially identical to the schematic plan views for the light source module according to Exemplary Embodiment 1 shown in FIGS. 2 and 3, further explanation is omitted.

Referring to FIGS. 2, 3 and 6, the display device includes a display panel 100, a timing controlling part 110, a panel driving part 130, a light source module 200 and a local dimming driving part 470.

The timing controlling part 110 receives a control signal 101 and an image signal 102. In one exemplary embodiment, the control signal 101 may include a horizontal synchronization signal Hsync and a vertical synchronization signal Vsync. The horizontal synchronization signal Hsync defines a starting time and a finishing time for a display of a horizontal line displayed on the screen. The vertical synchronization signal Vsync defines a starting time and a finishing time of each frame. The timing controlling part 110 generates a timing control signal 110a controlling a driving timing of the display panel 100 using the received control signal 101. In one exemplary embodiment, the timing control signal 110a includes a clock signal, a horizontal starting signal STH and a vertical starting time STV. In one exemplary embodiment, the control signal 101 and an image signal 102 are received from the local dimming driving part 470.

The local dimming driving part 470 includes an image analyzing part 210, a dimming level determining part 220, a light distribution compensating part 430, an additional compensating part 240, a light source driving part 250 and a light sensing part 460.

The light distribution compensating part 430 compensates for the temperature of the light-emitting blocks LB using the dimming level so that heat generated thereby is not locally concentrated.

In one exemplary embodiment, the light distribution compensating part 430 establishes the light-emitting block (blocks) LB continuously maintained at a temperature higher than the reference temperature as an over light-emitting block (blocks) OLB. The light distribution compensating part 430 decreases the designated dimming level of the over light-emitting block (blocks) OLB and increases the dimming levels of the peripheral light-emitting block (blocks) SLB positioned adjacent to the over light-emitting block OLB. Accordingly, a locally high temperature of the over light-emitting block (blocks) OLB is distributed to the peripheral light-emitting blocks SLB, and thus problems, such as the melting of the side mold equipped in the display device or the deterioration of the liquid crystal equipped in the display device may be prevented. The additional compensating part 240 decreases the temperature of the over light-emitting block OLB when the temperature of the over light-emitting block OLB is not sufficiently distributed to the peripheral light-emitting blocks SLB, or when the temperature of the over light-emitting block OLB cannot be distributed to the peripheral light-emitting blocks SLB.

In the present exemplary embodiment, the additional compensating part 240 compensates the image signal corresponding to the pixels where the image is to be corrected. The pixels to be corrected may be compensated through image processing. The compensation through the image processing is for compensating since if the luminance of the over light-emitting block OLB is decreased, the luminance of the image displayed on the display panel 100 becomes decreased and the image becomes dark.

The light source driving part 250 generates driving signals driving the light-emitting blocks using the compensated dimming levels through the light distribution compensating part 430 and/or the additional compensating part 240. n one exemplary embodiment, the driving signals may be PWM signals. The driving signals correspond to the light-emitting blocks, respectively, the light-emitting blocks are driven to have the brightness corresponding to the luminance of the image signal, respectively. That is, in the present exemplary embodiment, the light source module 200 is driven using a local dimming method.

The light sensing part 460 respectively senses the temperature of the light-emitting blocks LB in the light source module 200. A block requiring the control of the generation of heat, that is, the over light-emitting block OLB, on which the temperature higher than the reference temperature is sensed, is selected on the basis of the sensed temperature.

According to Exemplary Embodiment 2 of the present invention, the light distribution compensating part 430 and the additional compensating part 240 may be embodied by an FPGA or an ASIC.

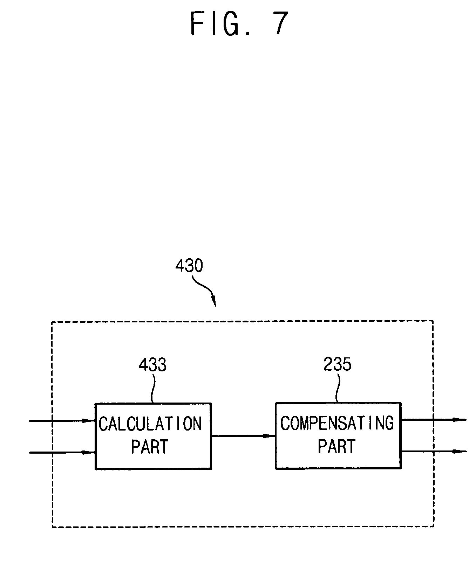

FIG. 7 is a block diagram illustrating an exemplary embodiment of a light distribution compensating part of FIG. 6.

The light distribution compensating part 430 includes a calculation part 433 and a compensating part 235.

The calculation part 433 calculates the over power amount required, so that the temperature of the over light-emitting block OLB is less than the reference temperature on the basis of the LUT. A luminance compensable value of the peripheral light-emitting blocks SLB positioned adjacent to the over light-emitting block OLB may be calculated on the basis of the over power amount. In the present exemplary embodiment, the luminance compensable value is the total value of differences between power consumption amounts of the peripheral light-emitting blocks SLB and a power amount corresponding to the reference temperature. In the present exemplary embodiment, when the luminance compensable value is larger than the over power amount, the dimming level of the over light-emitting block OLB is sufficiently compensated.

The compensating part 235 increases the dimming levels of the peripheral light-emitting blocks SLB to increase the temperature of the peripheral light-emitting blocks SLB in a smaller range than the calculated luminance compensable value. Also, the compensating part 235 decreases the dimming level of the over light-emitting block OLB to decrease the temperature corresponding to the over light-emitting block OLB.

Accordingly, the light source driving part 250 drives the light-emitting blocks LB according to compensated dimming levels of the light-emitting blocks LB.

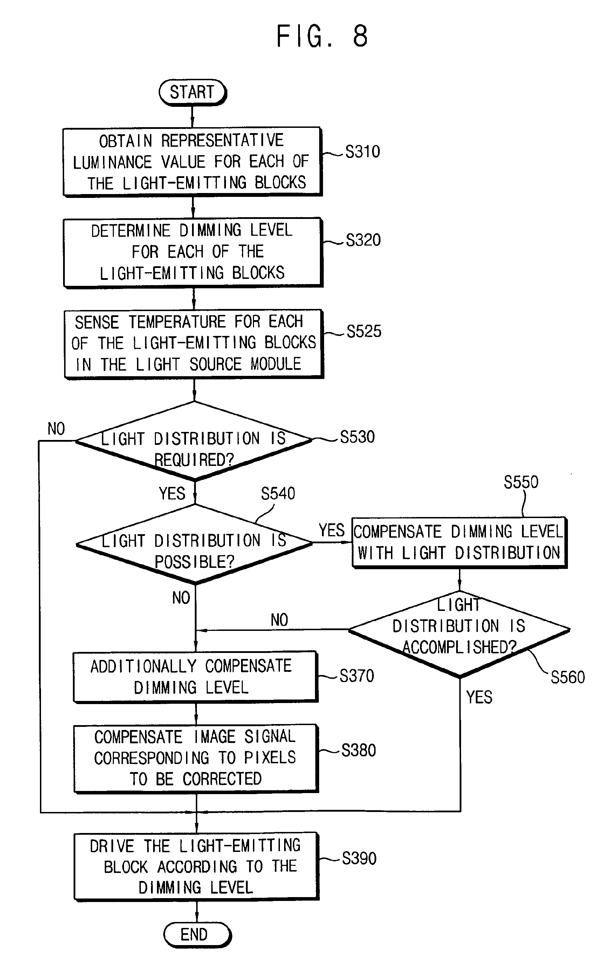

FIG. 8 is a flowchart illustrating an exemplary embodiment of a method for driving the local dimming driving part 470 of FIG. 6.

Referring to FIGS. 6 and 8, the image analyzing part 210 analyzes a gray scale for an image signal of a frame unit received from an external device to obtain a representative luminance values corresponding to each of the light-emitting blocks LB (step S310).

The dimming level determining part 220 determines the dimming level controlling the brightness of the light-emitting blocks LB using the representative luminance value (step S320).

The light distribution compensating part 430 controls the dimming level of the over light-emitting block (blocks) OLB and the dimming levels of the peripheral light-emitting blocks SLB positioned adjacent to the over light-emitting block (blocks) OLB to compensate. That is, the locally high temperature of the over light-emitting block (blocks) OLB is distributed to the peripheral light-emitting blocks SLB having the low temperature.

Here, when the over light-emitting block OLB is B35 in the light source module 200 comprising 10×8 light-emitting blocks B1, B2, ..., B79, B80, shown in FIG. 2, the peripheral light-emitting blocks SLB may be B24, B25, B26, B34, B36, B44, B45 and B46.

Similarly, when the over light-emitting block OLB is BL5 in the light source module 200 comprising 1×8 light-emitting blocks BL1, BL2, ..., BL7, BL8, shown in FIG. 3, the peripheral light-emitting blocks SLB may be BL4 and BL6.

In one exemplary embodiment, the light sensing part 460 respectively senses the temperature of the light-emitting blocks LB in the light source module 200 (step S525).

The calculation part 433 included in the light distribution compensating part 430 determines whether light distribution is required to control the generation of heat in the light-emitting blocks LB, that is, the existence of the over light-emitting block OLB, that is a light-emitting block having a temperature higher than the reference temperature, is sensed on the basis of the sensed temperature (step S530).

When the over light-emitting block OLB requiring the control of the generation of heat exists, the light distribution compensating part 430 starts a light distribution of the over light-emitting block OLB.

However, when the over light-emitting block OLB requiring the control of the generation of heat does not exist, the light source driving part 250 drives the light-emitting blocks LB according to the uncompensated dimming levels of the light-emitting blocks LB.

The calculation part 433 calculates an over power amount required, so that the temperature corresponding to the over light-emitting block OLB becomes less than the reference temperature, and a luminance compensable value of the peripheral light-emitting blocks SLB positioned adjacent to the over light-emitting block OLB is also calculated.

Here, the compensating part 235 included in the light distribution compensating part 430 checks that a light distribution is available, on the basis of whether or not the luminance compensable value exists (step S540).

When the luminance compensable value exists, the compensating part in the light distribution compensating part 430 decreases the dimming level of the over light-emitting block OLB and increases the dimming levels of the peripheral light-emitting blocks SLB, corresponding to a decreased degree of the dimming level, to compensate the dimming levels of the over light-emitting block (blocks) OLB and the peripheral light-emitting block SLB (step S550).

Also, the compensating part 235 compares the over power amount with the luminance compensable value to check that the light distribution is accomplished (step S560).

When the over power amount is larger than the luminance compensable value, since the light distribution is not sufficiently accomplished, the additional compensating part 240 decreases the dimming level of the over light-emitting block OLB (step S370).

Here, since the dimming level of the over light-emitting block OLB is decreased, the luminance of the image displayed on the display panel 100 decreases to have a luminance less than that of the initially displayed image. Accordingly, to compensate for this decrease in luminance, the additional compensating part 240 compensates the image signal corresponding to the pixels where the image is to be corrected (step S380).

Next, the light source driving part 250 drives the light-emitting blocks with the brightness corresponding to the luminance of the image signal according to the compensated dimming level (step S390).

When the over power amount is less that the luminance compensable value, since the light distribution is sufficiently accomplished, the light source driving part 240 drives the light-emitting blocks LB according to the compensated dimming levels (step S390).

When the luminance compensable value does not exist, since the luminance of the peripheral light-emitting blocks SLB is close to the luminance corresponding to the reference temperature, the compensating part 235 in the light distribution compensating part 230 cannot distribute light. Accordingly, the additional compensating part 240 decreases the dimming level of the over light-emitting block OLB (step S370) and compensates the image signal corresponding to pixels to be corrected (step S380), without the light distribution. Next, the light driving part 240 drives the light-emitting blocks LB according to the compensated dimming levels (step S390).

Accordingly, the amount of heat that is locally concentrated in the over light-emitting block OLB may be distributed to the peripheral light-emitting blocks SLB, and thus the distribution of the heat prevents the side mold equipped in the display device from being melted, or the liquid crystal equipped in the display device from deteriorating.

Also, according to Exemplary Embodiment 2 of the present invention, since the position of the over light-emitting block OLB may be accurately obtained by the light sensing part 460, and the number of degrees over the reference temperature may also be obtained, the present invention may precisely control the local generation of heat.

According to exemplary embodiments of the present invention, the amount of heat that is locally concentrated in an over light-emitting block OLB may be distributed to peripheral light-emitting blocks SLB, and thus the present invention may prevent undesirable effects, such as the melting of a side mold equipped in a display device, or the deterioration of liquid crystal equipped in the display device. Accordingly, the present invention may reduce the distance between lamps and an optical sheet in the display device.

The foregoing is illustrative of the present invention and is not to be construed as limiting thereof. Although a few example embodiments of the present invention have been described, those skilled in the art will readily appreciate that many modifications are possible in the example embodiments without materially departing from the novel teachings and advantages of the present invention. Accordingly, all such modifications are intended to be included within the scope of the present invention as defined in the claims. In the claims, means-plus-function clauses are intended to cover the structures described herein as performing the recited function and not only structural equivalents but also equivalent structures. Therefore, it is to be understood that the foregoing is illustrative of the present invention and is not to be construed as limited to the specific example embodiments disclosed, and that modifications to the disclosed example embodiments, as well as other example embodiments, are intended to be included within the scope of the appended claims. The present invention is defined by the following claims, with equivalents of the claims to be included therein.

## Claims

1. A light source device comprising:
a light source module comprising a plurality of light-emitting blocks; and
a local dimming driving part which drives the plurality of light-emitting blocks on the basis of a dimming level of an over light-emitting block, by controlling a dimming level of the over light-emitting block and dimming levels of peripheral light-emitting blocks positioned adjacent to the over light-emitting block to drive the plurality of light-emitting blocks.

2. The light source device of claim 1, wherein the local dimming driving part comprises:
an image analyzing part which analyzes an image signal corresponding to a light-emitting block of the plurality of light-emitting blocks to obtain a representative luminance value of the light-emitting block;
a dimming level determining part which determines a dimming level for controlling the brightness of the light-emitting block using the representative luminance value;
a light distribution compensating part which compensates the dimming level of the over light-emitting block and the dimming levels of the peripheral light-emitting blocks on the basis of a reference temperature; and
a light source driving part which drives the plurality of light-emitting blocks on the basis of the compensated dimming levels.

3. The light source device of claim 2, wherein the light distribution compensating part decreases the dimming level of the over light-emitting block and increases the dimming levels of the peripheral light-emitting blocks, when a power corresponding to the reference temperature is substantially higher than a power consumption amount of the over light-emitting block.

4. The light source device of claim 2, wherein the light distribution compensating part comprises:
an inquiring part which inquires about a temperature of each of the light-emitting blocks on the basis of the power consumption amount of the light-emitting blocks;
a calculation part which calculates an over power amount of the over light-emitting block, wherein the over power amount is an amount of power higher than an amount of power corresponding to the reference temperature, of the inquired temperatures and a luminance compensable value of the peripheral light-emitting blocks; and
a compensating part which performs a compensating operation which decreases the dimming level of the over light-emitting block and which increases the dimming levels of the peripheral light-emitting blocks by the luminance compensable value.

5. The light source device of claim 2, wherein the local dimming driving part further comprises a light sensing part which senses temperatures of the light-emitting blocks of the light source module.

6. The light source device of claim 5, wherein the light distribution compensating part comprises:
a calculation part which calculates an over power amount of the over light-emitting block, wherein the over power amount is an amount of power higher than an amount of power corresponding to a reference temperature, among the sensed temperatures and a luminance compensable value of the peripheral light-emitting blocks; and
a compensating part which performs a compensating operation which decreases the dimming level of the over light-emitting block and increases the dimming levels of the peripheral light-emitting blocks by the luminance compensable value.

7. A method for driving a light source device which drives a light source including a plurality of light-emitting blocks by individually driving each of light-emitting blocks, the method comprising:
determining a dimming level of each of the plurality of light-emitting blocks;
controlling a dimming level of an over light-emitting block and dimming levels of peripheral light-emitting blocks positioned adjacent to the over light-emitting block on the basis of the dimming level of the over light-emitting block; and
driving the plurality of light-emitting blocks on the basis of the controlled dimming levels.

8. The method of claim 7, wherein determining the dimming level of each of the plurality of light-emitting blocks comprises:
analyzing an image signal corresponding to the plurality of light-emitting blocks to obtain a representative luminance value of each of the plurality of light-emitting blocks; and
determining the dimming level controlling the brightness of the plurality of light-emitting blocks using the representative luminance value.

9. The method of claim 8, wherein controlling the dimming level of the over light-emitting block and the dimming levels of the peripheral light-emitting blocks further comprises:
decreasing the dimming level of the over light-emitting block; and
compensating the image signal corresponding to pixels being a target of correction

10. The method of claim 8, wherein controlling the dimming level of the over light-emitting block and the dimming levels of the peripheral light-emitting blocks comprises:
inquiring about each of the temperatures of the plurality of light-emitting blocks on the basis of power consumption amounts of the plurality of light-emitting blocks;
designating a light-emitting block having a temperature higher than a reference temperature as the over light-emitting block;
calculating an over power amount of the over light-emitting block and a luminance compensable value of the peripheral light-emitting blocks;
decreasing the dimming level of the over light-emitting block by the over power amount when the over power amount is within a range smaller than the luminance compensable value; and
increasing the cumulative dimming levels of the peripheral light-emitting blocks by the over power amount when the over power amount is within the range smaller than the luminance compensable value.

11. The method of claim 8, wherein controlling the dimming level of the over light-emitting block and the dimming levels of the peripheral light-emitting blocks further comprises sensing temperatures of the plurality of light-emitting blocks.

12. The method of claim 11, wherein controlling the dimming level of the over light-emitting block and the dimming levels of the peripheral light-emitting blocks comprises:
designating a light-emitting block having a temperature higher than a reference temperature as the over light-emitting block;
calculating an over power amount of the over light-emitting block and a luminance compensable value of the peripheral light-emitting blocks;
decreasing the dimming level of the over light-emitting block by the over power amount when the over power amount is within a range smaller than the luminance compensable value; and
increasing the dimming levels of the peripheral light-emitting blocks by the over power amount when the over power amount is within a range smaller than the luminance compensable value.

13. The method of claim 12, wherein the luminance compensable value is the sum of differences between power consumption amounts of the peripheral light-emitting blocks and a power amount corresponding to the reference temperature.
